# EUROPEAN PATENT APPLICATION

(11) **EP 1 703 443 A2**
(43) Date of publication of application: **20.09.2006**
(21) Application number: 06111175.3
(22) Date of filing: 15.03.2006
(51) Int. Cl.: G06K 9/00

(54) **Object identifying device, mobile phone, object identifying unit, object identifying method, program executable on computer for operating the object identifying device and computer readable medium including the program**

(30) Priority: 15.03.2005 JP 2005074035
(71) Applicant: OMRON CORPORATION, Kyoto-shi, Kyoto 600-8530 (JP)
(72) Inventor: Kakiuchi,Takashi OMRON Corp., 801,Minamifudodo-cho, Kyoto-shi, Kyoto, Kyoto 600-8530 (JP)
(74) Representative: Weihs, Bruno Konrad

(57) **Abstract**

An object identifying device has a shooting unit for shooting an object to be shot to identify the object on the basis of elements of the face of the object shot by the shooting unit. The object identifying device includes a camouflage deciding unit for deciding whether or not the object is a camouflage on the basis of a reflected image, which is reflected on the eye of the object , of the shot image obtained by shooting the object by the shooting unit.

## Description

The present application claims foreign priority based on Japanese Patent Application No. 2005-074035, filed March 15, 2005, the content of which is incorporated herein by reference.

### BACKGROUND OF THE INVENTION

### 1. Technical Field

The present invention relates to an object identifying device, amobilephone, an object identifying unit and an object identifying method that shoot an object to be shot such as the face or the iris of a human being to identify the object.

### 2. Related Art

Usually, as a system for identifying the person himself (herself), various kinds of identifying systems have been proposed such as a face identifying system for identifying the person by shooting a face, an iris identifying system for identifying the person by shooting an iris or the like.

These identifying systems serve to identifying the person by shooting an object to be shot such as a face or an eye. In this case, an impersonation (camouflage) by a photograph needs to be rejected.

As a method for rejecting the impersonation by the photograph, a person identifying device has been proposed in which an object to be shot is shot a plurality of times and when the backgrounds of shot images do not continue, the person identifying device decides that the object is not the person himself or herself (see JP-A-2004-362079).

However, when the impersonation by the photograph is rejected on the basis of whether or not the background continues, if the person identifying device is mounted on a mobile information terminal such as a mobile phone or a PDA to identify the object while he or she moves by a streetcar, a motor vehicle or waking, the background in the shot image changes so that the obj ect cannot be decided to be the person himself or herself .

Further, a problem undesirably arises that if photographs obtained by shooting images on the same background are prepared, the impersonation can be easily realized.

### SUMMARY OF THE INVENTION

It is a purpose of the present invention to provide an object identifying device, a mobile phone, an object identifying unit, an object identifying method, an object identifying program, and a computer-readable medium including the object identifying program in which a difficulty does not arise when the person himself or herself is identified and an impersonation by using photographs can be rejected.

However, the present invention need not achieve the above objects, and other objects not described herein may also be achieved. Further, the invention may achieve no disclosed objects without affecting the scope of the invention.

The present invention concerns an object identifying device for identifying an object to be shot on the basis of elements of a face of the object shot, comprising a shooting unit for shooting the object to obtain a shot image, and a camouflage deciding unit for deciding whether or not the object is a camouflage on the basis of a reflected image, which is reflected on the eye of the object to be shot, of the shot image.

The identification of the object to be shot based on the elements of the face may include a identification based on the iris of the object to be shot or a identification based on the face of the object to be shot.

The reflected image that is reflected on the eye of the object may include a reflected image that is reflected on any of the pupil part of the eye, the iris part, the iris of the eye (pupil and iris) part or the white of the eye or the entire part of the eye.

According to the above-described structure, an impersonation by using a planar photograph can be easily rejected. Especially, since a background is not included as an identifying condition, even when the object is moving, the object can be properly identified.

According to an aspect of the present invention, the obj ect identifying device further comprises a reflected image changing unit for changing at least a part of the reflected image to be reflected on the eye of the object, wherein a plurality of shot images are obtained by changing the reflected image to be reflected on the eye of the object by the reflected image changing unit and shooting the object by the shooting unit, and the camouflage deciding unit decides that the object is a camouflage when changes by the reflected image changing unit do not respectively appear on the reflected images, which are reflected on the eye of the object, of the shot images.

As examples of objects to be changed by the reflected image changing unit, the color, the size and the form or the like of the reflected image may be exemplified.

Thus, the impersonation by using the planar photographs can be more assuredly rejected.

Further, according to another aspect of the present invention, the reflected image changing unit may include a display unit for displaying an image or a lighting unit for performing a lighting operation.

Thus, the reflected image to be reflected on the eye can be more clearly displayed and the impersonation by using the planar photograph can be more assuredly rejected.

Further, according to the present invention, a mobile phone having the object identifying device may be provided.

Thus, the object to be shot can be identified by the mobile phone and, at that time, an impersonation by using a planar photograph can be rejected.

Further, according to the present invention, an object identifying method may be provided for identifying an object to be shot on the basis of elements of a face of the object shot by a shooting unit, the method comprising deciding whether or not the object is a camouflage on the basis of a reflected image, which is reflected on the eye of the object, of the shot image obtained by shooting the object by the shooting unit.

Thus, an impersonation by using a planar photograph can be rejected.

Further, according to the present invention, an object identifying unit including a camouflage deciding unit or an object identifying program may be provided for obtaining a shot image of an object and deciding whether or not the object is a camouflage on the basis of a reflected image, which is reflected on the eye of the object, of the shot image.

Thus, the object identifying unit is mounted on a suitable device such as a mobile phone, a PDA terminal, a personal computer or the like or the object identifying program is installed in a suitable device, so that the object identifying device in which the impersonation by a photograph is rejected can be provided.

According to the present invention, can be provided an object identifying device, a mobile phone, an object identifying unit, an object identifying method and an object identifying program in which a difficulty does not arise when the person himself or herself is identified and an impersonation by using photographs can be rejected.

### BRIEF DESCRIPTION OF THE DRAWINGS

Fig. 1 is a perspective view of an object identifying device according to a first exemplary, non-limiting embodiment of the present invention.
Fig. 2 is a block diagram of the exemplary, non-limiting object identifying device.
Fig. 3 is a flowchart showing operations performed by a control part of the exemplary, non-limiting object identifying device.
Fig. 4 is an explanatory view of a shot image.
Fig. 5 is a block diagram showing the structure of an object identifying device according to a second exemplary, non-limiting embodiment of the present invention.

### DETAILED DESCRIPTION OF THE INVENTION

Embodiments of the present invention will be described together with the drawings.

### [First Embodiment]

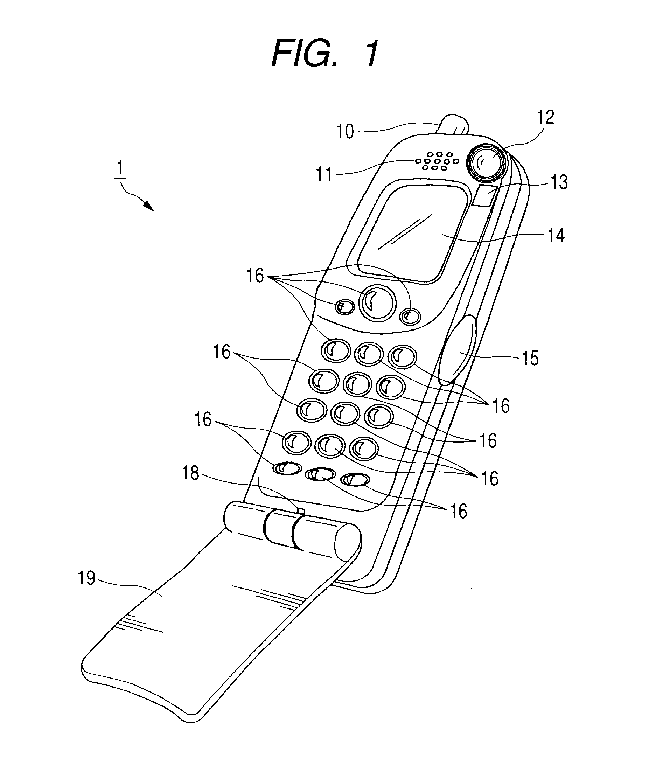

Firstly, the structure of an object identifying device 1 will be described by referring to a perspective view of the object identifying device 1 shown in Fig. 1.

The object identifying device 1 is composed of a mobile phone as a kind of a mobile information terminal. On a front surface, an audio outputting speaker 11, a liquid crystal monitor 14 for displaying an image, a plurality of operating buttons 16 for inputting an operation and an audio inputting microphone 18 are provided in order from an upper part.

In the right side of the speaker 11, a shooting camera 12 and a lighting device 13 are provided closely upward and downward. The shooting camera 12, the lighting device 13 and the liquid crystal monitor 14 are arranged so as to be provided on the same surface (a front surface in this embodiment) as that of the object identifying device 1 and the shooting direction of the camera 12, the lighting direction of the lighting device 13 and the display direction of the liquid crystal monitor 14 are designed to be located in the same direction. The lighting device 13 is formed with a suitable lighting device such as a flash lighting device for flashing or a lighting device for lighting (for instance, an LED or a fluorescent lamp).

Further, on the right side of the object identifying device 1, a shutter button 15 of the camera 12 is provided. To the lower part of the front surface of the object identifying device 1, an opening and closing cover 19 rotating backward and forward is pivotally attached. Under a state that the opening and closing cover 19 is closed, the plurality of operating buttons 16 are covered and protected therewith.

On the upper part of the back surface of the object identifying device 1, an antenna 10 for a radio communication is provided. Then, in the object identifying device 1, a controller composed of a CPU and a storing part (a ROM or a RAM, etc.) or a battery charger is provided.

With the above-described structure, the object identifying device 1 can transmit data by operating the operating buttons 16, receive data by the operation of the operating buttons 16 and permit an audio communication with a telephone at a remote place. Further, the operating buttons 16 are operated so that contents can be displayed by connecting to an Internet or an electronic mail can be transmitted and received. Then, a still image or a moving image by the camera 12 can be shot by pressing down the shutter button 15 and the shot image can be displayed on the liquid crystal monitor 14.

Since the camera 12 and the liquid crystal monitor 14 are provided on the same surface, the liquid crystal monitor is necessarily reflected on the eye of a user during a shooting operation. Thus, a reflected image to be reflected on the eye can be displayed on the liquid crystal monitor 14.

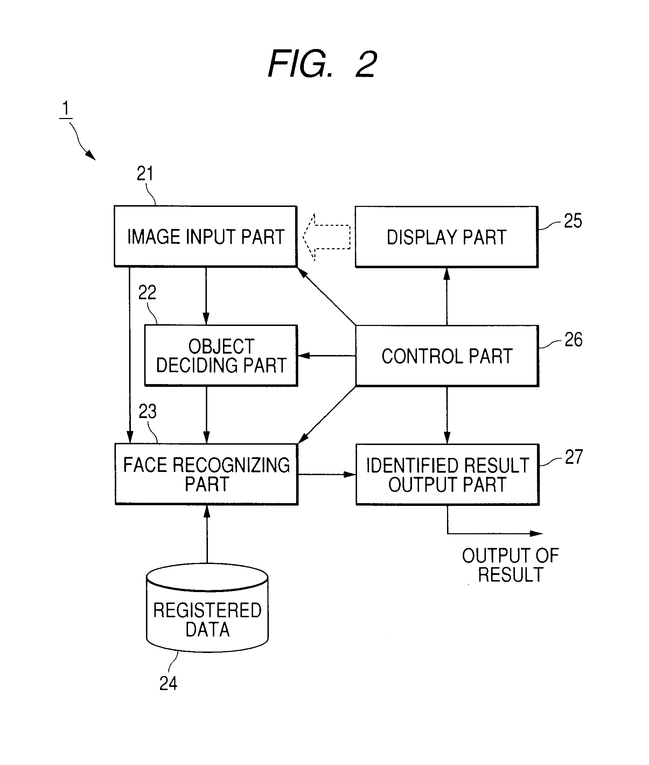

Now, the structure of the object identifying device 1 will be described by referring to a block diagram of the object identifying device 1 shown in Fig. 2. In this explanation, elements related to a shooting function and an identifying function necessary for identifying an individual will be described and the description of other elements will be omitted.

The object identifying device 1 includes an image input part 21, an object deciding part 22, a face recognizing part 23, a registered data (dictionary data) 24, a display part 25, a control part 26 and a identified result output part 27.

The image input part 21 is formed with the above-described camera 12 (Fig. 1) and transmits shot image data obtained by shooting an object to be shot by the camera 12 to the object deciding part 22 and the face recognizing part 23 in accordance with a control of the control part 26.

The object deciding part 22 is provided in a controller in the object identifying device 1 and decides whether or not the object reflected on the shot image data is a solid body in accordance with the control of the control part 26 and transmits a decided result to the face recognizing part 23.

The face recognizing part 23 is provided in the controller in the object identifying device 1 and compares the shot image data obtained from the image input part 21 with the registered data 24 read from the storing part to perform a face matching as a kind of a biological identification in accordance with the control of the control part 26. Then, the face recognizing part identifies the individual on the basis of the matching result of the face matching and the decision as to whether or not the object is the solid body obtained from the object deciding part 22, and transmits the identified result of the identification of the individual to the identified result output part 27.

The registered data 24 is data stored in the storing part and the shot image data of a previously registered user. The shot image data may be formed with an image including the eye of a person such as the image of a face or the image of an iris so as to identify the individual. In this embodiment, the image of the face that does not cause a mental resistance to the user is employed. The registered data 24 is not limited to the image data and may be composed of feature data obtained by extracting a feature point or a feature amount from the image data.

The display part 25 is formed with the above-described liquid crystal monitor 14 (Fig. 1) to display various kinds of images such as characters, figures, colors, patterns, etc., in accordance with the control of the control part 26. Further, at the time of shooting an image, the display part displays a reflected image to be reflected on the eye of the user. In this embodiment, the reflected image includes two kinds of a complete white color and a complete blue color. However, the present invention is not limited thereto, and the reflected image may be composed of suitable images. For instance, the reflected image may be composed of many kinds of colors using other colors, or composed of figures such as a circle, a triangle, a square or a star shape, or set to characters. That is, the images having different forms may be prepared to change the forms of the image to be displayed. Further, images having different size may be prepared as well as the images having the above-described colors and forms.

The control part 26 is provided in the controller in the object identifying device 1 to transmit control signals respectively to the elements and control operations in accordance with data or a program stored in the storing part. The program stored in the storing part includes an object identifying program for identifying the object by shooting.

The identified result output part 27 is formed with the above-described liquid crystal monitor 14 to output an identified result obtained from the face recognizing part 23 in accordance with the control of the control part 26. The identified result output part 27 is not limited to the liquid crystal monitor 14. For instance, the identified result output part 27 may be composed of other elements such as a communication part for transmitting the identified result during an Internet communication and the control part 26 for controlling whether or not the mobile phone can be operated after the identification is carried out. In this case, the operation of the mobile phone is controlled by the output of identified result information and the identified result is not displayed on the liquid crystal monitor 14 so that the user canbe made not to be conscious of an identifying operation.

According to the above-described structure, the reflected image to be reflected on the eye of the user can be displayed by the liquid crystal monitor 14, the image of an individual can be shot under this state, the individual can be identified from the shot image and the identified result can be outputted (displayed on the liquid crystal monitor 14).

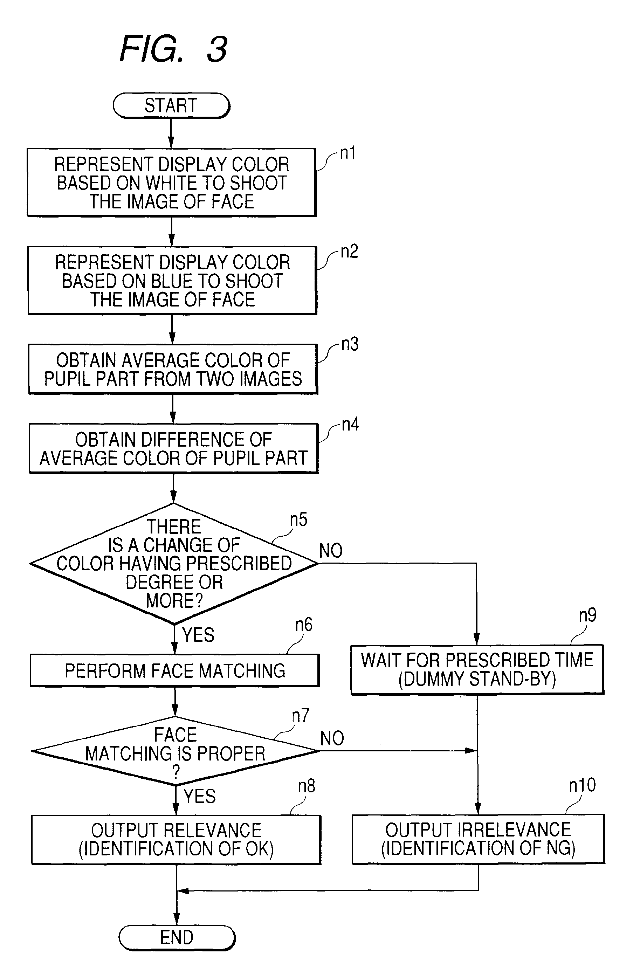

Now, an operation performed by the control part 26 in accordance with the object identifying program will be described by referring to a flowchart showing the operation performed by the control part 26 shown in Fig. 3.

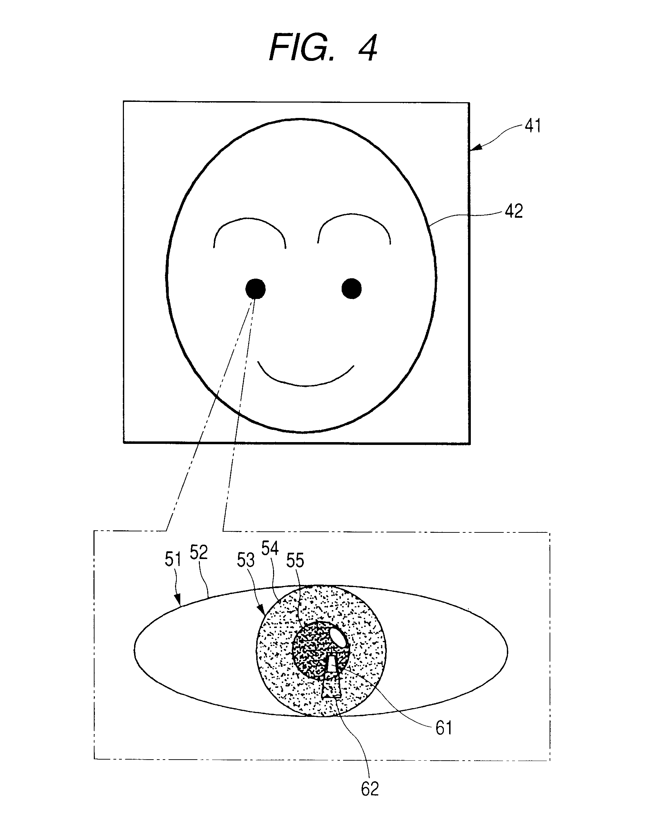

The control part 26 controls an image based on a white to be displayed on the liquid crystal monitor 14 to obtain the shot image data of a user by shooting the image of the user by the camera 12 (step n1) . At this time, as shown in an explanatory view of a shot image shown in Fig. 4, in a shot image 41 shot by the camera, a face image 42 is taken. Then, the white of the eye 52, a pupil part 53, an iris part 54 and the pupil 55 are taken in an eye part 51. Then, in the pupil part 53, a reflected image 62 of the object identifying device on which the object identifying device 1 (Fig. 1) is reflected (taken) and a reflected image 61 of the liquid crystal monitor on which the liquid crystal monitor 14 (Fig. 1) is reflected are taken.

At this time, since the image based on the white is displayed on the liquid crystal monitor 14, the reflected image 61 is based on the white.

Then, the control part 26 controls an image based on a blue to be displayed on the liquid crystal monitor 14 as a reflected image different from that in the step n1 and obtains the shot image data of the user by shooting the image of the user by the camera 12 (step n2).

At this time, since the image based on the blue is displayed on the liquid crystal monitor 14, the reflected image 61 is based on a color difference from that in the step n1, that is, based on the blue.

When a lighting operation is carried out by the lighting device 13 in the step n1, the user is shot by carrying out the same lighting operation in the step n2. When the lighting operation is not carried out by the lighting device 13 in the step n1, the user is shot without performing the lighting operation in the step n2. An interval of time from a shooting operation in the step n1 to a shooting operation in the step n2 is set to a predetermined interval of time. This interval of time is set to such an interval of time that makes it impossible to replace a photograph by another photograph in front of the camera 12 (or during which a photograph is hardly replaced by another photograph). The interval of time is preferably set so that the shooting operations are continuously carried out a plurality of times in a short time.

The control part 26 transmits a plurality of shot image data thus obtained, that is, two shot image data in this embodiment to the object deciding part 22. The object deciding part 22 extracts the face image data and the pupil part (in this embodiment, the pupil part designates the iris of the eye) thereof to obtain an average color of the pupil part (step n3) . The average color of this pupil part may be obtained for both the right and left eyes or only for either the right eye or the left eye. Further, as the average color, the average of the densities of components is preferably obtained in the three primary colors of RGB. However, the average of the density only of one component such as an R (red) component, a G (green) component or a B (blue) component may be obtained, or the average of brightness of colors may be obtained irrespective of the color components. Especially, in this embodiment, since the white color and the blue color are used, when the average of the color of the B component is obtained, a change can be detected.

The object deciding part 22 obtains the difference between the average colors of the pupil parts respectively obtained from the shot image data (step n4). At this time, the difference between either the right or the left eyes may be obtained, however, the difference between the same pupil parts such as the right eyes or the left eyes is preferably obtained.

When the object deciding part 22 decides that the obtained difference is not lower than a predetermined threshold value (a threshold value supposed from the change of the reflected image), that is, a change of a prescribed level or higher appears in the image (that is, the change of color or the change of brightness), the object deciding part 22 decides that the user is a true user (step n5: yes), and transmits a decided result to the control part 26.

The control part 26 performs a face matching by the face recognizing part 23 (step n6).

In the face matching, the face recognizing part compares the shot image data having a more preferable lighting environment of the plurality of shot image data with the registered data 24 to check up the face. Whether either of the shot image data is to be used may be previously determined.

In comparing the shot image data with the registered data 24, a feature amount peculiar to the person himself or herself is obtained from the shot image data and compared with the feature amount of the registered data 24. When the difference between the feature amounts is located within a predetermined fixed threshold value, the control part decides that the user is the person himself or herself.

The feature amount peculiar to the person himself or herself can be obtained by employing, for instance, a gabble-wavelet conversion to a feature point obtained from the shot image data. The feature point can be obtained by cutting a face part from a rough position of the face, and normalizing the size of the face, applying a peculiar graph thereto to specifically detect the position of the feature point of the face. The gabble-wavelet conversion is a method used for analyzing a signal or compressing an image in which a wavelet wave form is used for an object to be converted to extract only a feature (a frequency component or the like) of the wave form from the object to be converted.

When the result of the face matching received from the face recognizing part 23 is proper (step n7: Yes), the control part 26 outputs the information of relevance (a identification of OK) (step n8) as the identified result of an individual to finish processes.

In the step n5, when the change of a prescribed level or higher does not appear in the image, the control part 26 decides that the user is camouflaged (step n5: No), the control part 26 waits for a stand-by time substantially the same as that during which the steps n6 to n7 are performed (step n9). When a camouflage by a photograph or the like is carried out, this stand-by time is provided to make it impossible for an illegal user to understand whether the result of the face matching is improper because the camouflage is recognized or the result is improper because the face matching cannot be satisfactorily carried out on the basis of a processing time.

After the step n9, or when the result of the face matching in the step n7 is improper (step7: No), the control part 26 outputs the information of irrelevance (a identification of NG) as the identified result (step n10) to finish processes.

The control part 26 controls functions for displaying the result on the liquid crystal monitor 14 or deciding whether or not operations can be carried out by the shutter button 15 and the operating buttons 16 on the basis of the identified result information showing the relevance/irrelevance.

In accordance with the above-described operations, whether an object to be shot is true or false can be decided by the reflected image 61 that is reflected on the eye of the object and an impersonation by a photograph or the like can be rejected.

Especially, since the image displayed on the liquid crystal monitor 14 is changed by a plurality of times of shooting operations, the impersonation by the photograph or the like can be assuredly rejected. That is, when the impersonation by the photograph is managed, if a plurality of shot image data obtained by changing the image displayed on the liquid crystal monitor 14 is compared, the change or the image does not appear in a pupil part, the object can be rejected by the decision in the step n5.

Namely, the reflected image that is taken on the pupil part reflects a scene that the object sees when the object is shot. Thus, when the image displayed on the liquid crystal monitor 14 is changed to shoot the object again, since the same scene as that during a previous shooting operation is not taken, a dummy by a photograph can be rejected.

As described above, in the present invention, the camouflage or dummy by using the photograph can be detected. However, a person who knows the above-described arrangements may be considered to devise a further camouflage in which a plurality of photographs are prepared that previously take into consideration reflected images and changes of the image and the photograph is replaced by another photograph during the shooting operations.

However, since a plurality of times of shooting operations are continuously carried out in a short time, an impersonation that the photograph is replaced by another photograph in front of the camera 12 for each of the shooting operations can be rejected.

Further, since the stand-by operation for a prescribed time is carried out in the step n9, the illegal user who tries to perform a camouflage cannot suppose whether the result of the face matching is improper because of the photograph or the result is improper because the accuracy of the photograph is not good.

Furthermore, since the face matching in which it takes the longest processing time in this embodiment and an algorithm is complicate is performed only once when the object is decided to be a camouflage in an object deciding process, an identifying process can be completed at high speed. Further, in the step n5, when the object is decided not to be the camouflage (step n5: Yes), the face matching is not carried out, or even when that the object is decided to be the camouflage, the face matching is carried out only once, so that the power consumption of a battery (battery charger) of the mobile phone can be suppressed to a minimum level.

Further, the user is identified irrespective of the background of the shot image, even when the user is moving, the user himself or herself can be properly identified as the person himself or herself.

The image displayed on the liquid crystal monitor 14 during each of the shooting operations may be preset, however, the image may be desirably changed at random for each identifying operation. For instance, in this embodiment, the white and blue colors are described, however, other colors than them may be used at random for each identifying operation or the sequence of the colors maybe changed. Thus, the impersonation can be more assuredly rejected.

Further, in the above-described embodiment, the user is decided to be a true user or a false user on the basis of the change of the reflected image obtained by performing the shooting operations twice (a plurality of times). However, the user may be decided by a below-described method. That is, the shooting operation is carried out once to decide whether or not a reflected image 61 is properly located in the eye of an object to be shot in the obtained shot image. When the reflected image is properly located, the processes after the step n5: Yes may be performed. When the reflected image is not properly located, the processes after the step n5: No may be performed.

In this case, the number of times of shooting operations can be reduced so that a proper identification can be carried out at higher speed. Specifically, when a photograph for a camouflage does not consider the reflected image 61, the camouflage can be detected by performing the shooting operation only once as described above. Further, when the image displayed on the liquid crystal monitor 14 during the shooting operation is changed at random for each identifying operation, the impersonation can be rejected even to a camouflage photograph in which the reflected image 61 is taken into consideration by the shooting operation of only one time.

Further, the user may be made to recognize the shooting operation as an operation that is performed at a timing when an identifying operation is performed as an identifying mode. Further, the user may not be made to recognize the shooting operation as an operation that is performed at a suitable timing in a device side (the mobile phone or the like). Further, the shooting operation may be set as an operation for shooting the user under a state that the user is not conscious thereof when the user starts the operation of any of functions.

Further, the reflected image 61 is composed of the display of the liquid crystal monitor 14, however, the reflected image may be composed of the lighting device 13. In this case, the reflected image 61 can be changed and the impersonation can be rejected by changing the presence and absence or a lighting color of the lighting device or providing a plurality of lighting devices 13 to change lighting positions and colors or the combinations thereof.

Further, in the steps n3 and n4, the camouflage is decided in accordance with the change of the color of the pupil part 53 as the change of the image. However, the change of one part of the image of the shot image may be compared with the change of the other part of the image to decide the camouflage.

In this case, for instance, a part of the pupil part 53 on which the reflected image 61 is reflected may be specified and the change of the image of the part on which the reflected image 61 is taken may be compared with the change of the image of parts other than the above-described part or all the image of the pupil part 53.

Thus, since the change of the image of the part on which the reflected image 61 is reflected is larger than the change of the image of other parts than the above-described part or all the image of the pupil part 53, if the difference between degrees of the changes of the images is not lower than the predetermined and prescribed threshold value, the object identifying part can decide a normal identification by the person himself or herself.

otherwise, the change of the image of the pupil part 53 may be compared with the change of the image of all the face. Also in this case, since the change of the image of the pupil part 53 is larger than the change of the image of all the face, if the difference between degrees of the changes of the images is not lower than the predetermined and prescribed threshold value, the object identifying part can decide a normal identification by the person himself and herself.

According to the above-described structure, the impersonation by the photograph can b prevented from accidentally succeeding. Specifically described, when the reflected image 61 is accidentally reflected on the photograph, a change appears in the image during each shooting operation. However, since the reflected image 61 is reflected on the entire part of the photograph, a partial change of the image is the same or substantially the same as the change of the entire part of the image (or the change of other parts of the image). Accordingly, the difference between variations depending on parts does not appear as in the case that a human being is identified. Thus, the object deciding part can decide the object to be the impersonation.

Further, in this case, the object deciding part may decide from the difference in areas where the color is changed or an area ratio.

Further, the object identifying device 1 is formed as a face identifying device for identifying the object to be shot on the basis of the face of the object to be shot, however, the object identifying device may be constructed as an iris identifying device for identifying the object by the iris of the object. In this case, the impersonation by the photograph can be also rejected and an individual can be identified with good accuracy.

### [Second Embodiment]

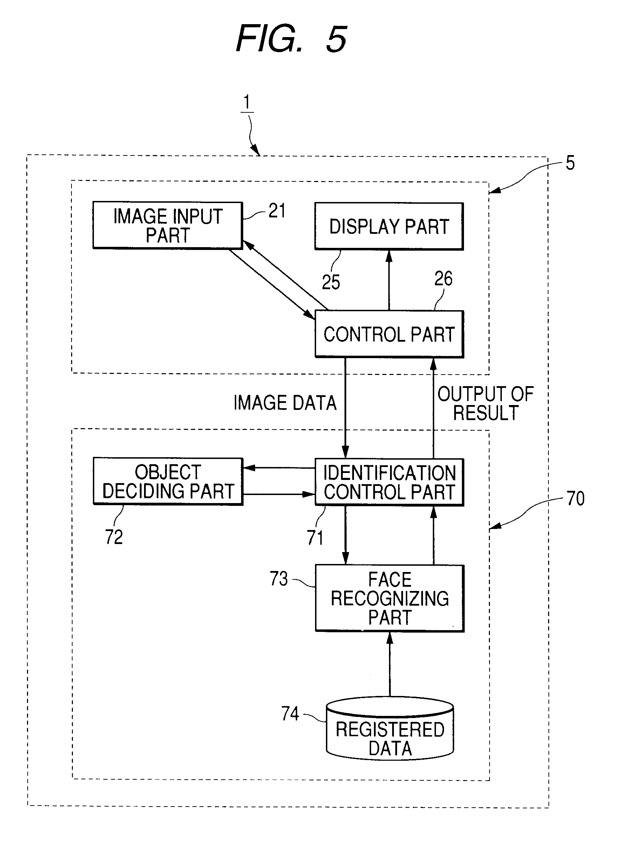

Now, an object identifying device 1 of a second embodiment will be described below by referring to a block diagram shown in Fig. 5.

The object identifying device 1 is formed by mounting an object identifying unit 70 on a mobile phone.

The object identifying device 1 includes an image input part 21, a display part 25 and a control part 26. Since these elements are the same as those of the above-described embodiment 1 except that shot image data from the image input part 21 is outputted to the control pat 26, a detailed description thereof will be omitted.

The image input part 21, the displaypart 25 and the control part 26 form a shooting unit 5 for performing a shooting process.

In the object identifying device 1, the object identifying unit 70 is electrically connected to suitable input and output parts. The object identifying unit 70 is provided with a controller (not shown in the drawing) composed of a CPU and a storing part (a ROM or a RAM). The controller includes a identification control part 71, an object deciding part 72, a face recognizing part 73 and registered data 74.

The identification control part 71 performs various kinds of control operations in accordance with data or a program stored in the storing part. The program stored in the storing part includes an object identifying program for identifying an object to be shot by a shot image.

Further, a storage medium in which the object identifying program is stored such that the computer can read it may be supplied to the object identifying unit 70 and allowed the controller of the object identifying unit 70 to read out the program stored in the storage medium and to execute it.

The storage medium includes, for example, a tape-type medium, such as a magnetic tape or a cassette tape, a disc-type medium including a magnetic disc, such as a floppy (a registered trademark) disc or a hard disc, and an optical disc, such as GD-ROM/MO/MD/DVD/GD-R, a card-type medium, such as an IC card (including a memory card) or an optical card, and a semiconductor memory, such as a mask ROM, an EPROM, an EEPROM, or a flash ROM.

Further, the object identifying unit 70 may be constituted such that it can be connected to a communication network, and the program may be supplied thereto through the communication network. The communication network includes, for example, the Internet, the Intranet, an intranet, an extranet, a LAN, an ISDN, a VAN, a CATV communication network, a virtual private network, telephone lines, a mobile communication network, and a satellite communication network. A transmission medium for constituting the communication network includes, for example, wire lines, such as IEEE1394, USB, power lines, cable TV lines, telephone lines, and ADSL lines, infrared rays, such as IrDA or a remote controller, and wireless lines, such as Bluetooth, (a registered trademark), 802.11 Wireless, HDR, a mobile communication network, satellite lines, and a terrestrial digital broadcasting network.

Further, the identification control part 71 identifies an individual on the basis of a decision as to whether or not the object is a camouflage by the object deciding part 72 and a result of the face matching by the face recognizing part 73 and transmits the identified result of an individual identification to the control part 26 of the object identifying device 1.

The object deciding part 72 decides whether or not the object taken in the shot image data is a camouflage in accordance with the control of the identification control part 71 and transmits the decided result to the identification control part 71.

The face recognizing part 73 compares the shot image data obtained from the identification control part 71 with the registered data 74 read from the storing part in accordance with the control of the identification control part 71 to check up the face as a kind of a biological identification.

The registered data 74 is data stored in the storing part and the shot image data of a previously registered user- The shot image data may be formed with an image including the eye of a person such as the image of a face or the image of an iris so as to identify the individual. In this embodiment, the image of the face that does not cause a mental resistance to the user is employed. The registered data 74 is not limited to the image data and may be composed of feature data obtained by extracting a feature point or a feature amount from the image data.

According to the above-described structure, the object identifying unit 70 is mounted on a device such as the mobile phone so that the object to be shot can be identified and the same operational effects as those of the first embodiment can be obtained.

The object identifying device 1 of the second embodiment constructed as described above performs substantially the same operations as those of the first embodiment. Namely, the control part 26 performs the operations shown in the steps n1 to n2 shown in Fig. 3. In a part from the step n2 to the step n3, the control part 26 transmits the shot image data to the identification control part 71. Then, the operations performed by the control part 26 in the steps n3 to n10 are performed by the identification control part 71. At this time, the object deciding part 72 carries out the operation of the object deciding part 22 of the first embodiment and the face recognizing part 73 carries out the operation of the face recognizing part 23 of the first embodiment. Then, the same data as the registered data 24 is stored in the registered data 74.

According to the above-described operations, the same operational effects as those of the first embodiment can be realized. Since the object identifying unit 70 is parts having input and output parts, the object identifying unit can be mounted on various kinds of devices. Further, the object identifying unit in which an impersonation hardly succeeds can be mounted in various kinds of devices.

In the second embodiment, the registered data is stored in the object identifying unit 70, however, the registered data may be stored in a storing part of the shooting unit 5 side.

In the corresponding relation between the structure of the present invention and the above-described embodiments, the mobile phone of the present invention corresponds the object identifying device 1 of the embodiments. Similarly, the shooting unit corresponds to the camera 12 and the image input part 21. The lighting unit corresponds to the lighting device 13. The reflected image changing unit and the display unit corresponds to the liquid crystal monitor 14 and the display part 25. The camouflage deciding unit corresponds the object deciding part 22 or the object deciding unit 72 performing the steps n3 to n5. The eye corresponds the pupil part 53. However, the present invention is not limited only to the structures of the above-described embodiments and many embodiments may be obtained.

It will be apparent to those skilled in the art that various modifications and variations can be made to the described preferred embodiments of the present invention without departing from the spirit or scope of the invention. Thus, it is intended that the present invention cover all modifications and variations of this invention consistent with the scope of the appended claims and their equivalents.

## Claims

1. An object identifying device for identifying an object to be shot on the basis of elements of a face of the object shot, the object identifying device comprising:
a shooting unit for shooting the object to obtain a shot image; and
a camouflage deciding unit for deciding whether or not the object is a camouflage on the basis of a reflected image, which is reflected on the eye of the object to be shot, of the shot image.

2. An object identifying device according to claim 1, further comprising:
a reflected image changing unit for changing at least a part of the reflected image to be reflected on the eye of the object,
wherein a plurality of shot images are obtained by changing the reflected image to be reflected on the eye of the object by the reflected image changing unit and shooting the object by the shooting unit, and the camouflage deciding unit decides that the object is a camouflage when changes by the reflected image changing unit do not respectively appear on the reflected images, which are reflected on the eye of the object, of the shot images.

3. An object identifying device according to claim 2, wherein the reflected image changing unit includes a display unit for displaying an image or a lighting unit for performing a lighting operation.

4. A mobile phone comprising the object identifying device according to claim 1, 2 or 3.

5. An object identifying unit comprising:
a camouflage deciding unit for obtaining a shot image of an object to be shot and deciding whether or not the object is a camouflage on the basis of a reflected image, which is reflected on the eye of the object, of the shot image.

6. An object identifying method for identifying an object to be shot on the basis of elements of a face of the object shot by a shooting unit, the method comprising:
deciding whether or not the object is a camouflage on the basis of a reflected image, which is reflected on the eye of the object, of the shot image obtained by shooting the object by the shooting unit.

7. An object identifying method according to claim 6, further comprising:
changing at least a part of the reflected image to be reflected on the eye of the object,
wherein a plurality of shot images are obtained by changing the reflected image to be reflected on the eye of the object and shooting the object, and the object is decided to be a camouflage when changes of the reflected image do not respectively appear on the reflected images, which are reflected on the eye of the object, of the shot images.

8. A program executable on a computer for operating an object identifying device, said program comprising instructions having:
a first function of shooting an object to obtain a shot image; and
a second function of deciding whether or not the object is a camouflage on the basis of a reflected image, which is reflected on the eye of the object, of the shot image obtained by the first function.

9. A computer-readable medium including a program executable on a computer for operating an object identifying device, said program comprising instructions having:
a first function of shooting an object to obtain a shot image; and
a second function of deciding whether or not the object is a camouflage on the basis of a reflected image, which is reflected on the eye of the object, of the shot image obtained by the first function.
